# EUROPEAN PATENT APPLICATION

(11) **EP 4 610 962 A1**
(43) Date of publication of application: **03.09.2025**
(21) Application number: 24188181.2
(22) Date of filing: 12.07.2024
(51) Int. Cl.: G09B 5/02, A63H 5/00, G09B 5/04, G09B 5/06, G09B 17/00

(54) **READING MATERIAL SOUNDING BY PRESSING**

(30) Priority: 27.02.2024 CN 202420371396 U
(71) Applicant: Heshan Astros Printing Ltd., Heshan, Guangdong 529700 (CN); Leo Paper Bags Manufacturing (1982) Limited, Kowloon (HK)
(72) Inventor: MAI, Jiajie, Kowloon (HK); CAI, Ruohua, Guangdong, 529700 (CN); LI, Boli, Guangdong, 529700 (CN)
(74) Representative: Bureau M.F.J. Bockstael NV

(57) **Abstract**

The application discloses a reading material sounding by pressing, including: a book body and a sounding assembly. The book body is provided with an opening. The sounding assembly includes a trigger button, a flexible pressing member, a control panel, a power supply and a sounding unit. The control panel, the power supply and the sounding unit are all arranged in the book body, the control panel is electrically connected with the power supply, the sounding unit is electrically connected with the control panel, the trigger button is mounted in the opening and extends to the control panel, and the flexible pressing member is arranged on an outer wall of the trigger button. Pressing the flexible pressing member can press the trigger button, and the trigger button can trigger the control panel, thereby controlling the sounding unit to sound. When reading, a child can press the flexible pressing member, and a soft touch fed back by the flexible pressing member can increase touch comfort of the child and enhance sensory development. With the pressing of the child, the flexible pressing member presses the trigger button, and the trigger button can trigger the control panel to make the sounding unit sound, which can improve interactivity and interest in reading.

## Description

### TECHNICAL FIELD

The present application relates to the technical field of reading materials manufacturing, and more particularly, to a reading material sounding by pressing.

### BACKGROUND

Electronic books are educational materials that aid in the visual and auditory development of children. They are widely embraced by both parents and children. Currently available electronic books typically operate by pressing buttons to trigger sounds or music relevant to the content being read, enhancing the level of amusement and interaction compared to traditional reading materials. However, merely pressing buttons to play music can become monotonous, rendering the functionality of electronic books too simplistic, thereby hindering the enhancement of their amusement and interactivity.

### SUMMARY

The present application aims to solve at least one of the technical problems in the existing technology. Therefore, the present application provides a reading material sounding by pressing, wherein a soft touch fed back by a flexible pressing member can increase touch comfort of a child and enhance sensory development. With the pressing of the child, the flexible pressing member presses a trigger button, and the trigger button can trigger a control panel to make a sounding unit sound, which can further improve interactivity and interest in reading.

A reading material sounding by pressing provided according to some embodiments of the present application comprises: a book body and a sounding assembly, wherein the book body is provided with an opening; and the sounding assembly comprises a trigger button, a flexible pressing member, a control panel, a power supply and a sounding unit; the control panel, the power supply and the sounding unit are all arranged in the book body, the control panel is electrically connected with the power supply, the sounding unit is electrically connected with the control panel, the trigger button is mounted in the opening and extends to the control panel, and the flexible pressing member is arranged on an outer wall of the trigger button; wherein pressing the flexible pressing member is capable of triggering the trigger button, and the trigger button is capable of triggering the control panel, thus controlling the sounding unit to sound.

The reading material sounding by pressing provided according to some embodiments of the present application at least has the following beneficial effects. When reading, the child can press the flexible pressing member, and the soft touch fed back by the flexible pressing member can increase touch comfort of the child and enhance sensory development. With the pressing of the child, the flexible pressing member presses the trigger button, and the trigger button can trigger the control panel to make the sounding unit sound, which can improve interactivity and interest in reading.

In the reading material sounding by pressing provided according to some embodiments of the present application, an optical source and/or a vibrating member are/is arranged in the trigger button or in the book body, the optical source and/or the vibrating member are/is electrically connected with the control panel, and pressing the flexible pressing member is capable of triggering the trigger button, thus controlling the optical source and/or the vibrating member to respond.

In the reading material sounding by pressing provided according to some embodiments of the present application, the book body is provided with a plurality of openings at intervals, the sounding assembly comprises a plurality of trigger buttons and a plurality of flexible pressing members, the outer wall of each of the trigger buttons is provided with a respective one of the flexible pressing members, each of the trigger buttons is mounted in a respective opening and is capable of triggering the control panel.

In the reading material sounding by pressing provided according to some embodiments of the present application, the flexible pressing member comprises a flexible cloth and a sponge, and the flexible cloth covers or wraps a peripheral wall of the sponge.

In the reading material sounding by pressing provided according to some embodiments of the present application, a back of the book body is provided with a mounting groove, and the power supply is mounted in the mounting groove.

In the reading material sounding by pressing provided according to some embodiments of the present application, a cover is arranged at the back of the book body, and the cover is configured to cover an opening of the mounting groove to limit the power supply in the mounting groove.

In the reading material sounding by pressing provided according to some embodiments of the present application, a switch for controlling on-off of the power supply is arranged at the back of the book body.

In the reading material sounding by pressing provided according to some embodiments of the present application, a rear side of the book body is provided with one or more sound outlets, and the sounding unit is arranged towards the sound outlets.

In the reading material sounding by pressing provided according to some embodiments of the present application, the sounding assembly further comprises a changeover switch electrically connected to the control panel, and a sounding mode of the sounding unit is capable of being controlled by the changeover switch.

The additional aspects and advantages of the present application will be given in part in the following description, and will become apparent in part from the following description, or will be learned through the practice of the present application.

### BRIEF DESCRIPTION OF THE DRAWINGS

The additional aspects and advantages of the present application will be more apparent and readily appreciated from the following description of the embodiments in conjunction with the accompanying drawings, wherein:
FIG. 1 is a front view of a reading material sounding by pressing provided by some embodiments of the present application;
FIG. 2 is a schematic structural diagram of the reading material sounding by pressing provided by some embodiments of the present application;
FIG. 3 is a schematic diagram showing a back of the reading material sounding by pressing provided by some embodiments of the present application;
FIG. 4 is a front view of a reading material sounding by pressing provided by some other embodiments of the present application;
FIG. 5 is a front view of a reading material sounding by pressing provided by some other embodiments of the present application; and
FIG. 6 is a side view of the reading material sounding by pressing provided by some other embodiments of the present application.

Reference numerals are as follows:
100 refers to book body; 110 refers to trigger button; 120 refers to flexible pressing member; 130 refers to control panel; 140 refers to power supply; 150 refers to sounding unit; 160 refers to switch; and 170 refers to sound outlet.

### DETAILED DESCRIPTION

The embodiments of the present application will be described in detail hereinafter. Examples of the embodiments are shown in the drawings. The same or similar reference numerals throughout the drawings denote the same or similar elements or elements having the same or similar functions. The embodiments described below by reference to the drawings are exemplary and are intended only to explain the present application and are not to be construed as limiting the present application.

In the description of the present application, it should be understood that the orientation or positional relationship indicated by the terms upper, lower, front, back, left and right is based on the orientation or positional relationship shown in the drawings, only for the convenience of describing the present application and simplifying the description, and does not indicate or imply that the indicated device or element must have a specific orientation, or be constructed and operated in a specific orientation. Therefore, the terms should not be construed as limiting the present application.

In the description of the present invention, the terms such as first and second if described are used for the purpose of distinguishing the technical features only, and cannot be understood as indicating or implying relative importance, or implicitly indicating the number of technical features indicated thereby, or implicitly indicating the order of technical features indicated thereby.

In the description of the present application, unless otherwise explicitly defined, words such as setting, mounting and connecting should be understood in a broad sense, and those skilled in the art can reasonably determine the specific meanings of the above words in the present application in combination with the specific contents of the technical solutions.

Electronic books are educational materials that aid in the visual and auditory development of children. They are widely embraced by both parents and children. Currently available electronic books typically operate by pressing buttons to trigger sounds or music relevant to the content being read, enhancing the level of amusement and interaction compared to traditional reading materials. However, merely pressing buttons to play music can become monotonous, rendering the functionality of electronic books too simplistic, thereby hindering the enhancement of their amusement and interactivity.

In order to solve this problem, the embodiments of the present application provide a reading material sounding by pressing. A soft touch fed back by a flexible pressing member 120 can increase touch comfort of a child and enhance sensory development. With the pressing of the child, the flexible pressing member 120 presses a trigger button 110, and the trigger button 110 can trigger a control panel 130 to make a sounding unit 150 sound, which can further improve interactivity and interest in reading. The specific structure and functions of the reading material sounding by pressing provided by the embodiments of the present application will be further explained below with reference to the words and drawings.

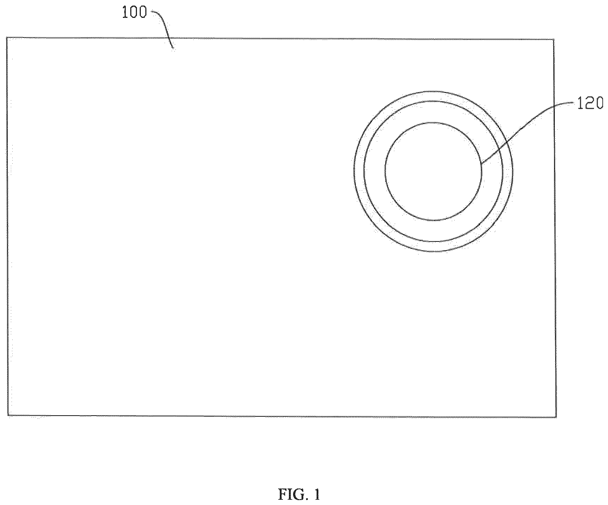

With reference to FIG. 1 to FIG. 3, a reading material sounding by pressing provided according to some embodiments of the present application comprises: a book body 100 and a sounding assembly. The book body 100 is provided with an opening. The sounding assembly comprises a trigger button 110, a flexible pressing member 120, a control panel 130, a power supply 140 and a sounding unit 150. A mounting space is provided in the book body 100. The control panel 130, the power supply 140 and the sounding unit 150 are all arranged in the mounting space in the book body 100. The control panel 130 is electrically connected with the power supply 140, the sounding unit 150 is electrically connected with the control panel 130, the trigger button 110 is mounted in the opening and extends to an upper side of the control panel 130, and the flexible pressing member 120 is arranged on an outer wall of the trigger button 110. Pressing the flexible pressing member 120 is capable of triggering the trigger button 110, and the trigger button 110 is capable of triggering the control panel 130, thus controlling the sounding unit 150 to sound.

In the reading material sounding by pressing provided according to some embodiments of the present application, when reading, the child can press the flexible pressing member 120, and the soft touch fed back by the flexible pressing member 120 can increase touch comfort of the child and enhance sensory development. With the pressing of the child, the flexible pressing member 120 presses the trigger button 110, and the trigger button 110 can trigger the control panel 130 to make the sounding unit 150 sound, which can further improve interactivity and interest in reading.

It can be understood that the reading material sounding by pressing may be not only the book body, but also a greeting card, a puzzle, a calendar, a wall calendar, a packaging box, and the like. The flexible pressing member 120 may be made of cloth, rubber, EVA, sponge, cotton, nylon, hemp, leather, pure wool, rayon, silk, bamboo charcoal fiber, chemical spinning fiber, elastic fiber, acetate fiber, polyester fiber, textile, man-made fiber and the like alone or in combination.

It should be noted that the reading material sounding by pressing may be provided with various modes, and different modes for the reading material sounding by pressing can be adjusted by pressing the trigger button 110 for different times, so that the sounding unit 150 can make different sounds.

Referring to FIG. 1 to FIG. 3, in the reading material sounding by pressing provided according to some embodiments of the present application, an optical source and/or a vibrating member (not shown in the figure) are/is arranged in the trigger button 110 or in the book body 100. The optical source and/or the vibrating member are/is electrically connected with the control panel 130, and pressing the flexible pressing member 120 is capable of triggering the trigger button 110, which is capable of triggering the control panel 130, thus controlling the optical source and/or the vibrating member to respond. The response of the optical source and/or the vibrating member can further improve the interactivity with the child and enhance the amusement for the child when reading.

It should be noted that the optical source may be an LED lamp and can emit different colors of light. The reading material sounding by pressing may be provided with various modes, and different modes for the reading material sounding by pressing can be adjusted by pressing the trigger button 110 for different times, so that the sounding unit 150 can make different sounds and the optical source can emit different colors of light.

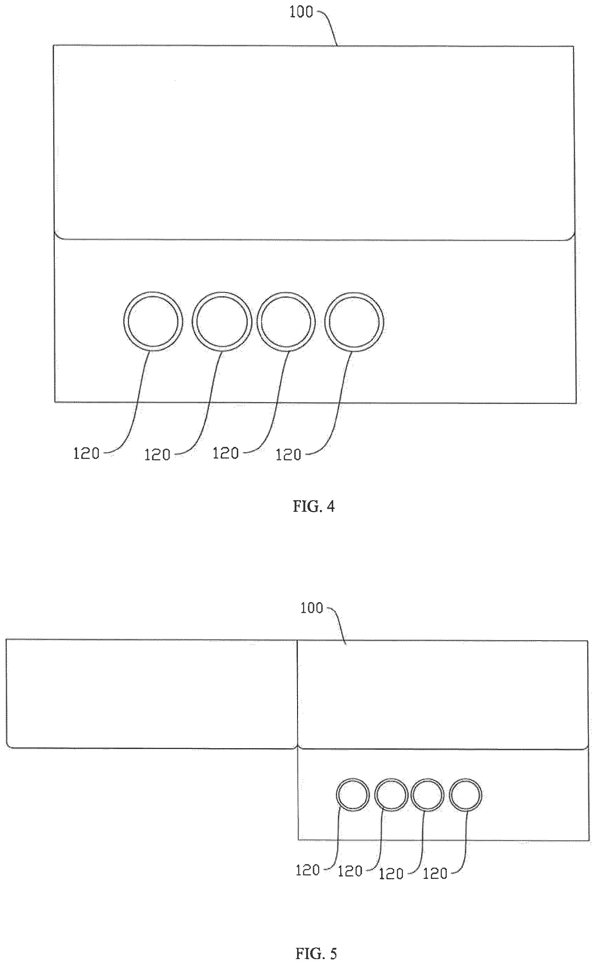

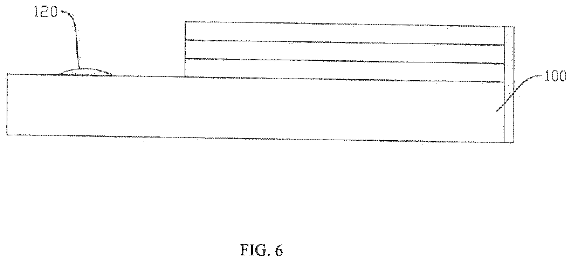

Referring to FIG. 1 and FIG. 4 to FIG. 6, in the reading material sounding by pressing provided according to some embodiments of the present application, the book body 100 is provided with a plurality of openings at intervals. The sounding assembly comprises a plurality of trigger buttons 110 and a plurality of flexible pressing members 120, the outer wall of each of the trigger buttons 110 is provided with a respective on of the flexible pressing members 120, each of the trigger buttons 110 is mounted in a respective opening and is capable of triggering the control panel 130. The plurality of different trigger buttons 110 can correspond to different sounding modes of the reading material sounding by pressing, which is beneficial to improving the amusement for the child when reading.

It should be noted that a special area may be set on one side of the book body 100 to install the plurality of trigger buttons 110, which is convenient for processing.

Referring to FIG. 1, in the reading material sounding by pressing provided according to some embodiments of the present application, the flexible pressing member 120 comprises a flexible cloth and a sponge, which have good texture and can enable the child to obtain a better touch, and the flexible cloth and the sponge are available through various channels, with lower cost.

Further, the flexible cloth covers or wraps a peripheral wall of the sponge, which can effectively fix the sponge and prevent the sponge from moving during transportation and use.

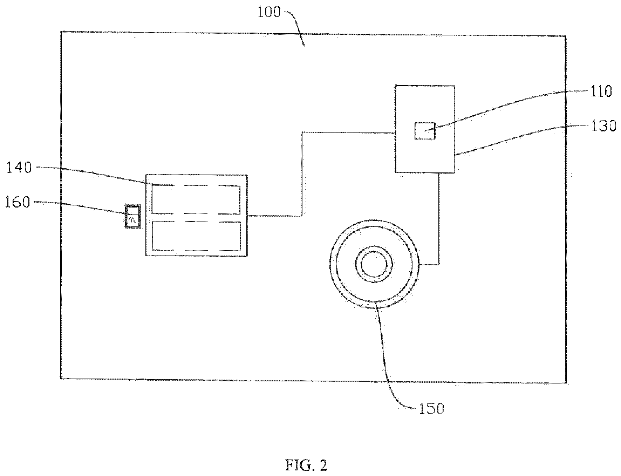

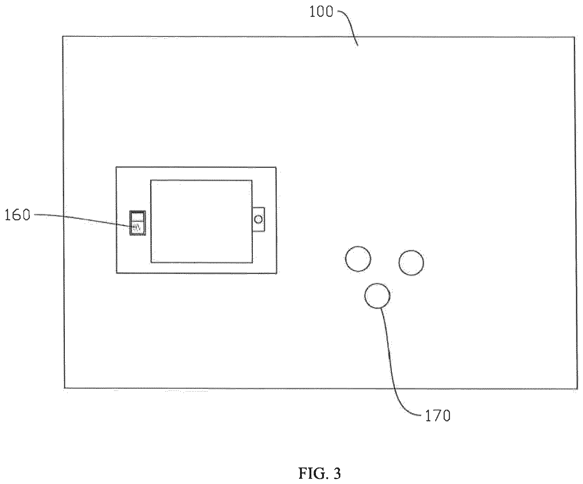

Referring to FIG. 2 and FIG. 3, in the reading material sounding by pressing provided according to some embodiments of the present application, a back of the book body 100 is provided with a mounting groove, and the power supply 140 is mounted in the mounting groove. The power supply 140 is fixed in a stable and reliable way, and an outside of the book body 100 can be kept flat, which is convenient for transportation and accommodation.

Referring to FIG. 2 and FIG. 3, in the reading material sounding by pressing provided according to some embodiments of the present application, a cover is arranged at the back of the book body 100, and the cover is configured to cover an opening of the mounting groove to limit the power supply 100 in the mounting groove. The cover can protect the power supply 140 in the sealed groove while fixing the power supply 140, and can prevent the power supply 140 from being damaged due to bumping during transportation or use.

Referring to FIG. 2 and FIG. 3, in the reading material sounding by pressing provided according to some embodiments of the present application, a switch 160 for controlling on-off of the power supply 140 is arranged at the back of the book body 100. The on-off of the power supply 140 can be controlled by toggling the switch 160, which is convenient for users to cope with different scenarios.

Referring to FIG. 2 and FIG. 3, in the reading material sounding by pressing provided according to some embodiments of the present application, a rear side of the book body 100 is provided with one or more sound outlets 170, and the sounding unit 150 is arranged towards the sound outlets 170, so that the sound of the sounding unit 150 can be clearly transmitted to the outside through the sound outlets 170, which is beneficial to improving the use experience of the child.

In the reading material sounding by pressing provided according to some embodiments of the present application, the sounding assembly further comprises a changeover switch electrically connected to the control panel 130, and a sounding mode of the sounding unit 150 is capable of being controlled by the changeover switch. With the cooperation of the control panel 130, the sounding unit 150 and the changeover switch, different sounding scenarios can be simulated, which is beneficial to improving the amusement for the child when reading.

The embodiments of the present application have been described in detail above with reference to the drawings, but the above embodiments are only used to illustrate, but are not intended to limit the technical solutions of the present application. The present application is not limited to the above embodiments, and various changes can be made within the knowledge of those of ordinary skills in the art without departing from the purpose of the present application.

## Claims

1. A reading material sounding by pressing, comprising:
a book body (100), provided with an opening; and
a sounding assembly, comprising a trigger button (110), a flexible pressing member (120), a control panel (130), a power supply (140) and a sounding unit (150), wherein the control panel (130), the power supply (140) and the sounding unit (150) are all arranged in the book body (100), the control panel (130) is electrically connected with the power supply (140), the sounding unit (150) is electrically connected with the control panel (130), the trigger button (110) is mounted in the opening and extends to the control panel (130), and the flexible pressing member (120) is arranged on an outer wall of the trigger button (110);
wherein pressing the flexible pressing member (120) is capable of triggering the trigger button (110), and the trigger button (110) is capable of triggering the control panel (130), thus controlling the sounding unit (150) to sound.

2. The reading material sounding by pressing according to claim 1, wherein an optical source and/or a vibrating member are/is arranged in the trigger button (110) or in the book body (100), the optical source and/or the vibrating member are/is electrically connected with the control panel (130), and pressing the flexible pressing member (120) is capable of triggering the trigger button (110), thus controlling the optical source and/or the vibrating member to respond.

3. The reading material sounding by pressing according to claim 1, wherein the book body (100) is provided with a plurality of openings at intervals, the sounding assembly comprises a plurality of trigger buttons (110) and a plurality of flexible pressing members (120), the outer wall of each of the trigger buttons (110) is provided with a respective one of the flexible pressing members (120), each of the trigger buttons (110) is mounted in a respective opening and is capable of triggering the control panel (130).

4. The reading material sounding by pressing according to claim 1, wherein the flexible pressing member (120) comprises a flexible cloth and a sponge, and the flexible cloth covers or wraps a peripheral wall of the sponge.

5. The reading material sounding by pressing according to claim 1, wherein a back of the book body (100) is provided with a mounting groove, and the power supply (140) is mounted in the mounting groove.

6. The reading material sounding by pressing according to claim 5, wherein a cover is arranged at the back of the book body (100), and the cover is configured to cover an opening of the mounting groove to limit the power supply (140) in the mounting groove.

7. The reading material sounding by pressing according to claim 5, wherein a switch (160) for controlling on-off of the power supply (140) is arranged at the back of the book body (100).

8. The reading material sounding by pressing according to claim 5, wherein a rear side of the book body (100) is provided with one or more sound outlets (170), and the sounding unit (150) is arranged towards the sound outlets (170).

9. The reading material sounding by pressing according to claim 1, wherein the sounding assembly further comprises a changeover switch electrically connected to the control panel, and a sounding mode of the sounding unit (150) is capable of being controlled by the changeover switch.
